# DEMANDE DE BREVET EUROPEEN

(11) **EP 4 234 972 A2**
(43) Date de publication de la demande: **30.08.2023**
(21) Numéro de dépôt: 23174930.0
(22) Date de dépôt: 27.06.2019
(51) Int. Cl.: F16F 15/073

(54) **AMORTISSEUR POUR UN OBJET PLACÉ DANS UN MILIEU SOUMIS À DES VIBRATIONS ET SYSTÈME D'AMORTISSEMENT CORRESPONDANT**

(30) Priorité: 27.06.2018 FR 1855815
(62) Demande divisionnaire de: 19182979.5
(71) Demandeur: Centre National d'Etudes Spatiales, 75001 Paris (FR); SMAC, 83130 La Garde (FR)
(72) Inventeur: LAMY, Pierre, 83140 SIX FOURS LES PLAGES (FR); DEMERVILLE, Tony, 8326 LA CRAU (FR); BIANCO, Quentin, 83220 LE PRADET (FR); SCHMISSER, Roseline, 31400 TOULOUSE (FR); HOT, Aurélien, 31450 CORRONSAC (FR); LAURENT, Elisabeth, 31590 LAVALETTE (FR)
(74) Mandataire: Germain Maureau

(57) **Abrégé**

L'invention concerne un amortisseur (14A) pour un objet placé dans un milieu soumis à des vibrations, l'amortisseur (14A) présentant un état de repos en l'absence de vibrations, un premier état de fonctionnement en cas de vibrations de premier type et un deuxième état de fonctionnement en cas de vibrations de deuxième type, le niveau de chaque vibration de premier type étant inférieur au niveau de chaque vibration de deuxième type ;
l'amortisseur (14A) comprend :
- une structure de support extérieure (21), une structure de support intérieure (22) et au moins une paire de membranes (23, 24) formée d'une première membrane (33A) et d'une deuxième membrane (33B)

chaque membrane (33A, 33B) étant formée d'un matériau viscoélastique comportant des fibres alignées sensiblement selon une même direction.

## Description

La présente invention concerne un amortisseur pour un objet placé dans un milieu soumis à des vibrations.

La présente invention concerne également un système d'amortissement correspondant.

Le système d'amortissement selon l'invention est destiné notamment à être installé dans un engin spatial, par exemple un satellite, pour amortir des vibrations d'un objet embarqué dans cet engin. Cet objet présente par exemple une charge utile de l'engin spatial ou alors un équipement embarqué.

Le système d'amortissement selon l'invention permet de réduire les micro-vibrations générées par les équipements embarqués à bord des engins spatiaux tout en étant compatible des vibrations lancement (sans avoir recours à un dispositif annexe).

Dans l'état de la technique, afin de limiter la propagation des micro-vibrations générées par les équipements embarqués à bord d'un engin spatial, une des solutions consiste à les découpler de la structure de l'engin spatial à l'aide d'amortisseurs viscoélastiques. Pour que cette solution soit efficace, ce mode de suspension doit être calé relativement bas (typiquement de l'ordre de 10 à 20 Hz). En l'état, cela engendrerait des déplacements très importants lors du lancement, incompatibles avec la tenue mécanique de ces éléments.

Pour remédier à ce problème, une des solutions utilisées dans l'état de la technique repose sur l'utilisation de butées élastiques mises en parallèle de la suspension basse fréquence, et dont le rôle est de tenir les niveaux de lancements. L'inconvénient de ce système est la génération de chocs sur l'équipement et la justification de la tenue de l'équipement exposé à ces sollicitations.

Une autre solution employée également dans l'état de la technique repose sur l'utilisation de systèmes de gerbage permettant de bloquer le système suspendu lors du lancement, mais ces systèmes sont toujours difficiles à mettre en oeuvre. Ils sont en effet souvent volumineux et coûteux.

Ainsi, aucun des systèmes d'atténuation connus ne permet d'allier une rigidité faible (nécessaire au filtrage des micro-vibrations) à une rigidité forte (nécessaire pour supporter les charges dynamiques lancement) tout en restant compact, simple à mettre en place et relativement peu coûteux.

L'objectif de la présente invention est de remédier à cet inconvénient et donc de permettre d'assurer une rigidité suffisante pour résister lors des vibrations importantes et une souplesse suffisante pour filtrer les micro-vibrations, tout en restant compact, simple à mettre en place et relativement peu coûteux.

À cet effet, l'invention a pour objet un amortisseur pour un objet placé dans un milieu soumis à des vibrations. L'amortisseur présente un état de repos en l'absence de vibrations, un premier état de fonctionnement en cas de vibrations de premier type et un deuxième état de fonctionnement en cas de vibrations de deuxième type, le niveau de chaque vibration de premier type étant inférieur au niveau de chaque vibration de deuxième type c'est à dire que l'amortisseur est configuré pour présenter un état de repos en l'absence de vibrations, un premier état de fonctionnement en cas de vibrations de premier type et un deuxième état de fonctionnement en cas de vibrations de deuxième type, le niveau de chaque vibration de premier type étant inférieur au niveau de chaque vibration de deuxième type, en d'autres termes, l'amortisseur est destiné à présenter un état de repos en l'absence de vibrations, un premier état de fonctionnement en cas de vibrations de premier type et un deuxième état de fonctionnement en cas de vibrations de deuxième type, le niveau de chaque vibration de premier type étant inférieur au niveau de chaque vibration de deuxième type. L'amortisseur comprend une structure de support extérieure destinée à être en contact rigide avec le milieu et formant une première portion de fixation et une deuxième portion de fixation disposées l'une en regard de l'autre. L'amortisseur comprend également une structure de support intérieure destinée à être en contact rigide avec l'objet. L'invention comprend au moins une paire de membranes formée d'une première membrane s'étendant entre la structure de support intérieure et la première portion de fixation de la structure de support extérieure selon une ou plusieurs directions d'extension, et d'une deuxième membrane s'étendant entre la structure de support intérieure et la deuxième portion de fixation de la structure de support extérieure selon une ou plusieurs directions d'extension. Chaque membrane est formée d'un matériau viscoélastique comportant des fibres alignées sensiblement selon une même direction.

Suivant d'autres aspects avantageux de l'invention, l'amortisseur comprend une ou plusieurs des caractéristiques suivantes, prise(s) isolément ou suivant toutes les combinaisons techniquement possibles :
- dans l'état de repos, chaque membrane s'étend sensiblement selon une seule direction d'extension présentant une courbure.
- lorsque l'amortisseur passe de l'état de repos au deuxième état de fonctionnement, la courbure de la direction d'extension de l'une des deux membranes de la ou de chaque paire de membranes augmente par rapport à la courbure de la direction d'extension dans l'état de repos de cette membrane et la courbure de la direction d'extension de l'autre membrane de la même paire de membranes diminue par rapport à la courbure de la direction d'extension dans l'état de repos de cette membrane.

- dans le premier état de fonctionnement, chaque membrane s'étend sensiblement selon plusieurs directions sécantes.
- les vibrations du deuxième type correspondent à des vibrations dont les niveaux d'accélération sont supérieurs à 0,1g, de préférence supérieurs à 0,3g, où g étant l'accélération de de la pesanteur à la surface de la terre.
- l'amortisseur comporte au moins deux paires de membranes telles que les premières membranes de ces paires et les deuxièmes membranes de ces paires sont disposées l'une en regard de l'autre.
- chaque membrane est faite d'un matériau viscoélastique avec une structure de fibres alignées.
- le milieu soumis à des vibrations est un engin spatial, notamment un engin spatial destiné à être lancé à partir de la surface terrestre.

La présente invention a également pour objet un système d'amortissement comprenant plusieurs amortisseurs telles que définis ci-dessus, destinés à amortir des vibrations d'un même objet.

Suivant d'autres aspects avantageux de l'invention, le système d'amortissement comprend une ou plusieurs des caractéristiques suivantes, prise(s) isolément ou suivant toutes les combinaisons techniquement possibles :
- les amortisseurs sont destinés à être disposés dans une partie périphérique de l'objet de sorte que la structure de support intérieure de chaque amortisseur soit en contact avec cette partie périphérique de l'objet.
- au moins certaines des membranes d'au moins certains des amortisseurs définissent au moins une fente s'étendant entre des extrémités de fixation de la membrane correspondante à la structure de support intérieure et à la structure de support extérieure.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue en perspective d'un système d'amortissement selon l'invention, le système d'amortissement comprenant plusieurs amortisseurs selon l'invention ;
- la figure 2 est une vue en perspective de l'un des amortisseurs de la figure 1 ; et
- la figure 3 est une vue de face de l'amortisseur de la figure 2.

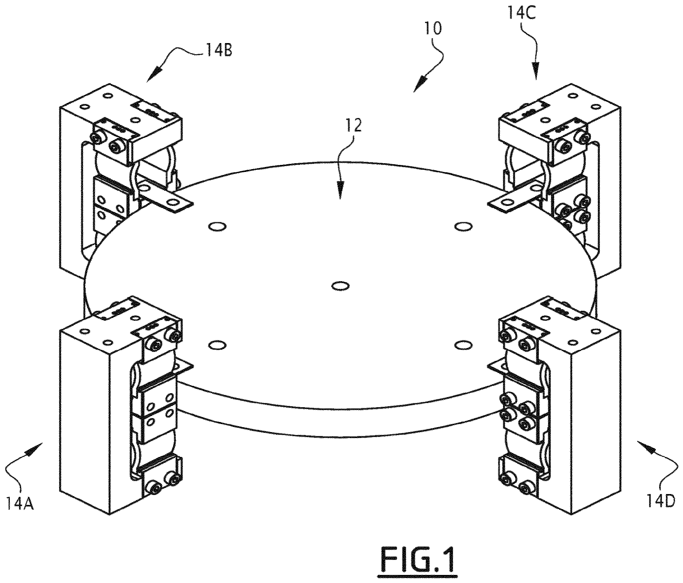

Dans l'exemple décrit, le système d'amortissement 10 de la figure 1 est embarqué à bord d'un engin spatial, notamment d'un satellite destiné à être lancé à partir de la surface terrestre.

Comme cela est connu en soi, le satellite comporte une pluralité d'équipements embarqués présentant par exemple une charge utile de ce satellite. Le satellite comporte en outre au moins une structure de fixation destinée à fixer les équipements embarqués.

Le système d'amortissement 10 permet d'amortir des vibrations d'un objet 12 embarqué dans le satellite et présentant par exemple l'un de ses équipements embarqués.

Sur la figure 1, cet objet 12 est représenté par un disque rigide présentant une partie périphérique et pouvant servir par exemple de plateforme pour un autre équipement embarqué. Cet autre équipement embarqué est destiné alors à être fixé rigidement sur l'objet 12.

Selon une autre variante de réalisation, cet objet 12 présente lui-même un équipement embarqué à amortir.

Bien entendu, le système d'amortissement 10 peut être embarqué dans tout autre engin mobile ou de manière plus générale, servir dans tout autre milieu présentant des vibrations importantes aussi bien que des micro-vibrations.

Dans la suite de la description, par vibrations importantes ou vibrations de deuxième type, on entend des vibrations de niveaux élevés dont les niveaux d'accélération vont de quelques dixièmes à quelques dizaines de g.

Par micro-vibrations ou vibrations de premier type, on entend des vibrations de niveaux faibles, c'est-à-dire de niveaux inférieurs à ceux des vibrations de deuxième type.

En particulier, il est, par exemple, connu que lors du lancement d'un satellite, ses équipements embarqués subissent des vibrations importantes dont les niveaux peuvent varier de quelques dixièmes à quelques dizaines de g, et lorsque le satellite est sur l'orbite, ses équipements embarqués subissent des micro-vibrations dont les niveaux sont inférieurs à ces valeurs.

Pour amortir les vibrations de l'objet 12, le système d'amortissement 10 comporte plusieurs amortisseurs selon l'invention. Ces amortisseurs sont par exemple disposés à la partie périphérique de l'objet 12 et comportent une partie présentant un lien rigide avec celui-ci, comme cela sera expliqué par la suite.

Sur la figure 1, quatre amortisseurs 14A à 14D sont illustrés.

Chacun de ces amortisseurs 14A à 14D présente un état de repos en l'absence de vibrations, un premier état de fonctionnement en cas de vibrations de premier type et un deuxième état de fonctionnement en cas de vibrations de deuxième type.

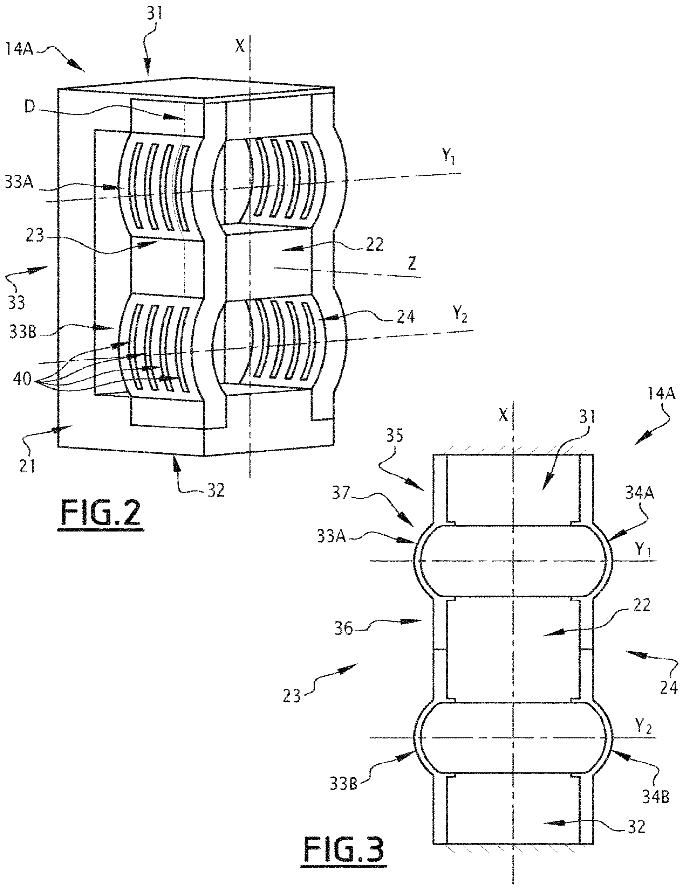

Les amortisseurs 14A à 14D sont, par exemple, sensiblement identiques. Ainsi, par la suite, seul l'amortisseur 14A sera expliqué de manière détaillée en référence notamment aux figure 2 et 3 illustrant respectivement sa vue en perspective et sa vue de face dans l'état de repos.

Comme cela est visible sur ces figures, l'amortisseur 14 comprend une structure de support extérieure 21, une structure de support intérieure 22 et deux paires de membranes 23, 24 s'étendant entre les structures extérieure 21 et inférieure 22.

La structure de support extérieure 21 est destinée à être en contact rigide avec la structure de fixation du satellite et comporte par exemple à cet effet des moyens de fixation adaptés.

La structure de support extérieure 21 forme une première portion de fixation 31 et une deuxième portion de fixation 32 disposées l'une en regard de l'autre selon un axe de support X.

Dans l'exemple de réalisation de la figure 1, les portions de fixation 31, 32 sont reliées l'une à l'autre par une portion de raccordement 33 qui forme par exemple une pièce unique avec ces portions de fixation 31, 32. Dans ce cas, la structure de support extérieure 21 se présente sous la forme de « U » dont les extrémités correspondent aux portions de fixation 31, 32.

Selon un autre exemple de réalisation, les portions de fixation 31, 32 forment des pièces séparées destinées par exemple à être fixées sur une ou plusieurs structures de fixation du satellite de manière séparée.

La structure de support intérieure 22 est destinée à être en contact rigide avec l'objet 12 et selon un exemple de réalisation, comporte à cet effet des moyens de fixation adaptés.

Selon un autre exemple de réalisation, la structure de support intérieure 22 est solidaire avec l'objet 12.

La structure de support intérieure 22 est reliée à la structure de support extérieure 21 via les paires de membranes 23, 24.

En particulier, chaque paire de membranes 23, 24 est formée d'une première membrane 33A, 34A s'étendant entre la structure de support intérieure 22 et la première portion de fixation 31 de la structure de support extérieure 21, et d'une deuxième membrane 33B, 34B s'étendant entre la structure de support intérieure 22 et la deuxième portion de fixation 32 de la structure de support extérieure 21.

Les premières membranes 33A, 34A des paires 23, 24 sont disposées l'une en regard de l'autre selon un axe transversal Y₁ perpendiculaire à l'axe de support X et à un axe Z. De manière analogue, les deuxièmes membranes 33B, 34B des paires 23, 24 sont disposées l'une en regard de l'autre selon un axe transversal Y₂ perpendiculaire à l'axe de support X et à l'axe Z. L'axe transversal Y₂ est donc parallèle à l'axe transversal Y₁.

Les membranes 33A, 34A, 33B, 34B sont, par exemple, sensiblement identiques.

En particulier, chaque membrane 33A, 34A, 33B, 34B se présente sous la forme d'une plaque flexible présentant deux extrémités de fixation et une partie flexible s'étendant entre les extrémités de fixation. Sur la figure 3, les extrémités de fixation 35, 36 et la partie flexible 37 uniquement de la membrane 33A, sont référencées.

Dans l'état de repos, chaque membrane 33A, 34A, 33B, 34B s'étend sensiblement selon une seule direction d'extension présentant une courbe bidimensionnelle bombée.

La direction d'extension D de la membrane 33A est visible sur la figure 2.

Dans le deuxième état de fonctionnement de l'amortisseur 14A, chaque membrane 33A, 34A, 33B, 34B s'étend également sensiblement selon une seule direction d'extension présentant une courbure différente de celle de l'état de repos.

Lorsque l'amortisseur 14A passe de l'état de repos au deuxième état de fonctionnement, l'une des membranes d'une même paire s'arrondit et l'autre s'aplatit jusqu'à devenir complètement plate, ce qui permet d'amortir les vibrations de deuxième type selon l'axe de support X, les axes transversaux Y₁ et Y₂, et l'axe Z.

Dans le premier état de fonctionnement, chaque membrane 33A, 34A, 33B, 34B s'étend sensiblement selon plusieurs directions d'extension sécantes. Autrement dit, dans le premier état de fonctionnement, chaque membrane 33A, 34A, 33B, 34B est fléchie, ce qui permet d'amortir les vibrations de premier type selon l'axe de support X, les axes transversaux Y₁ et Y₂, et l'axe Z.

Chaque membrane 33A, 34A, 33B, 34B est formée d'un matériau viscoélastique comportant des fibres alignées sensiblement selon une même direction coïncidant par exemple avec la direction d'extension de cette membrane dans l'état de repos. Ces fibres sont par exemple des fibres Kevlar^{®}.

Selon un aspect avantageux de l'invention, au moins certaines des membranes 33A, 34A, 33B, 34B définissent au moins une fente s'étendant entre les extrémités de fixation de cette membrane. En particulier, lorsque l'amortisseur 14A est dans l'état de repos, la ou chaque fente des membranes correspondantes s'étend sensiblement selon la direction d'extension de la membrane correspondante.

Sur la figure 2, quatre fentes définies dans chacune des membranes 33A, 34A, 33B, 34B sont visibles. Les fentes formées dans la membrane 33B sont référencées sur cette figure par la référence « 40 ».

Les fentes formées les membranes permettent de réduire la raideur des amortisseurs notamment selon les axes transversaux Y₁ et Y₂ et selon l'axe Z en favorisant le glissement entre des différentes sections ainsi créées, sans impacter les raideurs selon l'axe de support X. Cela permet alors d'équilibrer les raideurs selon les trois directions et d'éviter une dissymétrie dans le système 10.

Finalement, chaque membrane 33A, 34A, 33B, 34B est, par exemple, faite par moulage de type compression simple d'un matériau viscoélastique avec une structure de fibres alignées. Ensuite, les fentes sont formées sur au moins certaines des membranes 33A, 34A, 33B, 34B avec un gabarit adapté.

Le fonctionnement du système d'amortissement 10 sera désormais expliqué.

Initialement, en l'absence de vibrations de l'objet 12, chacun des amortisseurs 14A à 14D se trouve dans l'état de repos.

Lorsque des vibrations importantes, c'est-à-dire des vibrations de deuxième type, surviennent (lors par exemple du lancement du satellite), les fibres de chaque membrane commencent à travailler en traction de sorte que certaines membranes s'arrondissent et les autres s'aplatissent. Cela rigidifie alors la structure selon l'axe de support X, les axes transversaux Y₁ et Y₂, et l'axe Z.

Lorsque des micro-vibrations, c'est-à-dire des vibrations de premier type, surviennent (lorsque par exemple le satellite est mis sur l'orbite), les fibres de chaque membrane travaillent en flexion. Cela rend alors la structure suffisamment souple pour filtrer ces micro-vibrations selon l'axe de support X, les axes transversaux Y₁ et Y₂, et l'axe Z.

Par ailleurs, les fentes formées dans les membranes permettent d'équilibrer la distribution de raideurs selon les différents axes.

On conçoit alors que le système d'amortissement selon l'invention est particulièrement simple et compact. Il permet d'amortir des micro-vibrations tout en résistant aux environnements vibratoires de niveaux importants, selon les trois dimensions. Cela le rend donc particulièrement attractif pour le domaine spatial.

## Revendications

1. Amortisseur (14A, ..., 14D) pour un objet (12) placé dans un milieu soumis à des vibrations, l'amortisseur (14A, ..., 14D) présentant un état de repos en l'absence de vibrations, un premier état de fonctionnement en cas de vibrations de premier type et un deuxième état de fonctionnement en cas de vibrations de deuxième type, le niveau de chaque vibration de premier type étant inférieur au niveau de chaque vibration de deuxième type ;
l'amortisseur (14A, ..., 14D) comprenant :
- une structure de support extérieure (21) destinée à être en contact rigide avec le milieu et formant une première portion de fixation (31) et une deuxième portion de fixation (32) disposées l'une en regard de l'autre ;
- une structure de support intérieure (22) destinée à être en contact rigide avec l'objet (12) ;
- au moins une paire de membranes (23, 24) formée d'une première membrane (33A, 34A) s'étendant entre la structure de support intérieure (22) et la première portion de fixation (31) de la structure de support extérieure (21) selon une ou plusieurs directions d'extension (D), et d'une deuxième membrane (33B, 34B) s'étendant entre la structure de support intérieure (22) et la deuxième portion de fixation (32) de la structure de support extérieure (21) selon une ou plusieurs directions d'extension (D) ;
chaque membrane (33A, 34A, 33B, 34B) étant formée d'un matériau viscoélastique comportant des fibres travaillant en flexion lorsque des vibrations de premier type surviennent et commençant à travailler en traction lorsque des vibrations de deuxième type surviennent.

2. Amortisseur (14A, ..., 14D) selon la revendication 1, dans lequel, dans l'état de repos, chaque membrane (33A, 34A, 33B, 34B) s'étend sensiblement selon une seule direction d'extension (D) présentant une courbure.

3. Amortisseur (14A, ..., 14D) selon la revendication 2, dans lequel, lorsque l'amortisseur (14A, ..., 14D) passe de l'état de repos au deuxième état de fonctionnement, la courbure de la direction d'extension (D) de l'une des deux membranes (33A, 34A, 33B, 34B) de la ou de chaque paire de membranes (23, 24) augmente par rapport à la courbure de la direction d'extension (D) dans l'état de repos de cette membrane (33A, 34A, 33B, 34B) et la courbure de la direction d'extension (D) de l'autre membrane (33A, 34A, 33B, 34B) de la même paire de membranes (33A, 34A, 33B, 34B) diminue par rapport à la courbure de la direction d'extension (D) dans l'état de repos de cette membrane (33A, 34A, 33B, 34B).

4. Amortisseur (14A, ..., 14D) selon l'une quelconque des revendications précédentes, dans lequel, dans le premier état de fonctionnement, chaque membrane (33A, 34A, 33B, 34B) s'étend sensiblement selon plusieurs directions sécantes.

5. Amortisseur (14A, ..., 14D) selon l'une quelconque des revendications précédentes, dans lequel les vibrations du deuxième type correspondent à des vibrations dont les niveaux d'accélération sont supérieurs à 0,1g, de préférence supérieurs à 0,3g, où g étant l'accélération de de la pesanteur à la surface de la terre.

6. Amortisseur (14A, ..., 14D) selon l'une quelconque des revendications précédentes, comportant au moins deux paires de membranes (23, 24) telles que les premières membranes (33A, 34A) de ces paires (23, 24) et les deuxièmes membranes (33B, 34B) de ces paires (23, 24) sont disposées l'une en regard de l'autre.

7. Amortisseur (14A, ..., 14D) selon l'une quelconque des revendications précédentes, dans lequel chaque membrane (33A, 34A, 33B, 34B) est faite d'un matériau viscoélastique avec une structure de fibres alignées.

8. Amortisseur (14A, ..., 14D) selon l'une quelconque des revendications précédentes, dans lequel le milieu soumis à des vibrations est un engin spatial, notamment un engin spatial destiné à être lancé à partir de la surface terrestre.

9. Système d'amortissement (10) comprenant plusieurs amortisseurs (14A, ..., 14D) selon l'une quelconque des revendications précédentes, destinés à amortir des vibrations d'un même objet (12).

10. Système (10) selon la revendication 9, dans lesquels les amortisseurs (14A, ..., 14D) sont destinés à être disposés dans une partie périphérique de l'objet (12) de sorte que la structure de support intérieure (22) de chaque amortisseur (14A, ..., 14D) soit en contact avec cette partie périphérique de l'objet (12).

11. Système (10) selon la revendication 9 ou 10, dans lequel au moins certaines des membranes (33A, 34A, 33B, 34B) d'au moins certains des amortisseurs (14A, ..., 14D) définissent au moins une fente (40) s'étendant entre des extrémités de fixation (35, 37) de la membrane correspondante (33A, 34A, 33B, 34B) à la structure de support intérieure (22) et à la structure de support extérieure (21).
